Europäisches Patentamt

European Patent Office

Office européen des brevets

(19)

(11) Veröffentlichungsnummer: **0 377 620 B1**

## (12) EUROPÄISCHE PATENTSCHRIFT

(45) Veröffentlichungstag der Patentschrift:
18.12.91 Patentblatt 91/51

(51) Int. Cl.⁵: **F16B 21/18**

(21) Anmeldenummer: **88907636.0**

(22) Anmeldetag: **02.09.88**

(86) Internationale Anmeldenummer:
**PCT/DE88/00542**

(87) Internationale Veröffentlichungsnummer:
**WO 89/02540 23.03.89 Gazette 89/07**

## (54) WELLEN-ANSCHLAGHÜLSE.

(30) Priorität: **09.09.87 DE 3730200**

(43) Veröffentlichungstag der Anmeldung:
**18.07.90 Patentblatt 90/29**

(45) Bekanntmachung des Hinweises auf die
Patenterteilung:
**18.12.91 Patentblatt 91/51**

(84) Benannte Vertragsstaaten:
**DE FR GB IT**

(56) Entgegenhaltungen:
**EP-A- 0 134 448**
**DE-C- 2 632 261**
**SE-A- 176 522**
**SE-B- 453 771**
**US-A- 2 350 311**
**US-A- 4 225 263**

(73) Patentinhaber: **ROBERT BOSCH GmbH**
**Postfach 10 60 50**
**W-7000 Stuttgart 10 (DE)**

(72) Erfinder: **HERWIG, Wolfgang**
**Kesselbergstr. 7**
**W-3418 Uslar 1 (DE)**

Erfinder: **KLEEMANN, Dittmar**
**Im grossen Hofe 7**
**W-3403 Friedland 1 (DE)**
Erfinder: **KRÖGER, Uwe**
**Ebersdorfer Str. 38**
**W-3400 Göttingen (DE)**
Erfinder: **WÜRTH, Hans**
**Wilhelm-Blos-Str. 67**
**W-7140 Ludwigsburg (DE)**
Erfinder: **MAYER, Martin**
**Talstr. 38**
**W-7126 Sersheim (DE)**
Erfinder: **MEYER, Franz-Josef**
**v. Ketteler Str. 36**
**W-3200 Hildesheim (DE)**
Erfinder: **ROMETSCH, Werner**
**Gerteisenstr. 34**
**W-7016 Gerlingen (DE)**
Erfinder: **SCHENKEMEYER, Erhard**
**Kupferbreite 7**
**W-3400 Göttingen (DE)**
Erfinder: **SCHNEIDER, Martin**
**Rossbühlstrasse 7**
**W-7015 Korntal (DE)**
Erfinder: **SÖLLICK, Jürgen**
**Ithweg 5**
**W-3400 Göttingen (DE)**
Erfinder: **Kochendörfer, Heinrich**
**verstorben (DE)**

EP 0 377 620 B1

## Beschreibung

Stand der Technik

Die Erfindung geht von einer Wellen-Anschlaghülse nach der Gattung des Hauptanspruchs aus. Bei solch einem bekannten Wellenanschlag nach DE-C-2632261 treten durch das hier notwendige Weiten des als Anschlagring verwendeten Sprengrings beim Aufziehen auf die Welle und durch Grate an Sprengring und/oder Anschlaghülse Schwierigkeiten bei der Montage auf, wenn die Anschlaghülse auf der Welle über den dann in der Ring- nut der Welle sitzenden, noch etwas geweiteten Sprengring gezogen werden muß.

Aufgabe, Lösung und Vorteile der Erfindung

Der Erfindung liegt die Aufgabe zugrunde, Anschlagring und/oder Wellen-Anschlaghüse so zu gestalten, daß die Nachteile der bekannten Lösung vermieden werden und eine für die Großmengenfertigung geeignete automatisierbare Montage von Anschlaghülse und Anschlagring auf der Welle ermöglicht wird.

Zur Lösung der Aufgabe sind die im Kennzeichen des Hauptanspruchs angegebenen Malnahmen vorgesehen.

Dabei ist von Vorteil, daß in die zusätzliche umlaufende Nut größeren Durchmessers der geschlitzte Anschlagring bereits vor dem Aufziehen der Anschlaghülse auf die Welle in die Anschlaghülse eingesetzt werden kann und in dieser Nut unter Vorspannung sitzt, bis die Baueinheit derart auf die Welle gezogen ist, daß der Anschlagring die Ringnut der Welle umgibt. Während des Aufziehens können kein Kratzen und Verhaken auf der Welle auftreten, da der Anschlagring die Welle nicht berührt. Darüberhinaus ist der Anschlagring bereits in der Anschlaghülse aufgenommen, wenn er von der Anschlaghülse in die Ringnut der Welle gedrückt und in die erste umlaufende Nut der Anschlaghülse und somit in den eingebauten Zustand gelangt. Darüberhinaus lassen sich die vormontierte Baueinheit und das Aufziehen der Baueinheit auf die Welle automatisch bestellen.

Durch die in dem Unteranspruch aufgeführten Maßnahmen sind vorteilhafte Weiterbildungen der im Hauptanspruch angegebenen Wellen-Anschlaghülse möglich. Besonders vorteilhaft ist es, die zweite umlaufende Nut, in welcher der Anschlagring vor und während des Aufziehens der Anschlaghülse auf die Welle sitzt, mit der ersten umlaufenden Nut durch einen trichterförmigen Abschnitt zu verbinden, welcher den zusammendrückbaren Anschlagring in die Ringnut der Welle drückt, wenn die Anschlaghülse gegenüber dem Anschlagring weiter verschoben wird, bis der eingebaute Zustand erreicht ist, in dem der Anschlagring in die erste umlaufende Ringnut der Anschlaghülse greift. Zum Begrenzen der axialen Lage des Anschlagringes gegenüber der Ringnut der Welle genügt ein einfaches Hilfswerkzeug.

Zeichnung

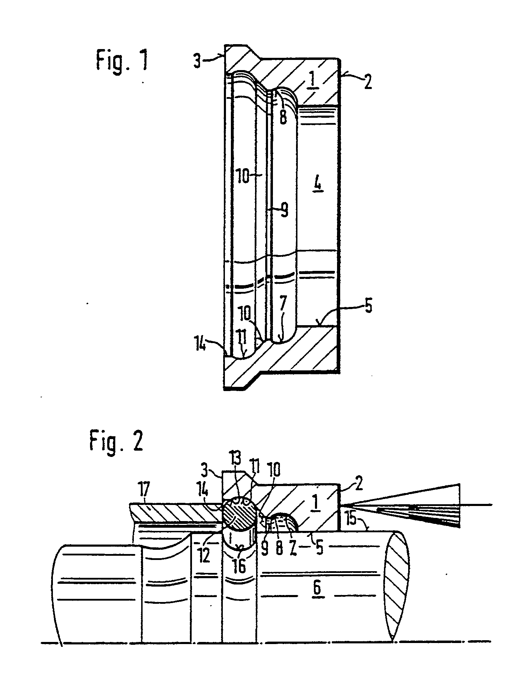

Ein Ausführungsbeispiel der Erfindung ist in der Zeichnung dargestellt und in der nachfolgenden Beschreibung näher erläutert. Es zeigen Figur 1 die Wellen-Anschlaghülse im Längsschnitt und Figur 2 die vormontierte Baueinheit aus Anschlaghülse und Anschlagring auf einer Welle, bevor der Anschlagring in eine von ihm umgebene Ringnut der Welle gedrückt ist.

Beschreibung des Ausführungsbeispieles

Eine Wellen-Anschlaghülse - im folgenden Anschlaghülse 1 - aus Metall hat zwei parallel zueinander verlaufende Stirnseiten 2 und 3. Die Anschlaghülse 1 ist mit einer abgestuften Längsbohrung 4 versehen. Die Längsbohrung 4 hat einen ersten zylindrischen Endabschnitt 5, der von der ersten Stirnseite 2 ausgeht und als Lagerabschnitt der Anschlaghülse 1 auf einer Welle 6 dient.

An den Endabschnitt 5 schließt sich eine erste umlaufende Nut 7 an mit größerem Durchmesser als der Endabschnitt 5. Im Längsschnitt hat die Nut 7 die Kontur eines Kreisausschnitts, der in einen sich kegelförmig verengenden ersten Halteabschnitt 8 übergeht. An den ersten Halteabschnitt 8 schließt sich eine schmaler im wesentlichen zylindrische Abschnitt 9 an. Der Abschnitt 9 kann auch abgerundet sein, um einen gratfreien Übergang zu erhalten.

Von dem Abschnitt 9 geht ein sich trichterförmig erweiternder Einführungsabschnitt 10 aus. Der Einführungsabschnitt 10 endet an einer zweiten umlaufenden Nut 11. Die zweite Nut 11 hat im Längsschnitt die gleiche Kontur wie die erste Nut 7. Lediglich der Durchmesser der zweiten umlaufenden Nut 11 ist um etwas mehr als die Materialstärke eines Anschlagrings 12 größer, welcher im eingebauten Zustand die Anschlaghülse auf der Welle 6 hält. Die zweite umlaufende Nut 11 geht ebenfalls in einen sich kegelförmig verengenden zweiten Halteabschnitt 13 über, der wiederum an einen im wesentlichen zylindrischen zweiten Endabschnitt 14 grenzt. Der zweite Endabschnitt 14 mündet an der zweiten Stirnseite 3. Der zweite Endabschnitt 14 kann auch abgerundet oder mit Fasen versehen sein zum leichteren Einführen des Anschlagringes 12.

Im Mantel 15 der Welle 6 ist eine Ringnut 16 ausgebildet. Der Anschlagring 12 ist geschlitzt und radial federnd - beispielsweise ein Sprengring. Der Radius der umlaufenden Nuten 7 und 11 und der Ringnut 16 ist

EP 0 377 620 B1

dem Radius des Drahtquerschnitts des Anschlagrings 12 angepaßt.

Der Anschlagring 12 ist in einem automatisierten Verfahren in die zweite umlaufende Nut 11 von der zweiten Stirnfläche 3 her eingesetzt. Anschlaghülse 1 und Anschlagring 12 bilden so eine vormontierte Baueinheit 1, 12. Die Baueinheit 1, 12 wird ebenfalls in einem automatisierten Verfahren auf die Welle 6 geschoben, wobei der als Lagerabschnitt dienende Endabschnitt 5 der Längsbohrung 4 auf dem Mantel 15 der Welle 6 gleitet und die zweite Stirnseite 3 in die Schieberichtung weist. Der Anschlagring 12 berührt dabei die Welle 6 nicht. Denn sein Innendurchmesser ist im aufgefederten Zustand größer als der Durchmesser der Welle 6.

Ist die Baueinheit 1, 12 soweit auf die Welle 6 geschoben, daß der Anschlagring 12 die Ringnut 16 der Welle 6 umgibt, dann liegt der Anschlagring 12 an einem Hilfswerkzeug 17 an. Das Hilfswerkzeug 17 verhindert ein weiteres Bewegen des Anschlagrings 12. Die Anschlaghülse 1 wird jedoch weiter geschoben. Dabei wird die Anschlaghülse 1 derart über den Anschlagring 12 gezogen, daß der trichterförmige Einführungsabschnitt 10 den geschlitzten Anschlagring 12 radial zusammendrückt und ihn dabei in die Ringnut 16 der Welle 6 drückt. Die Anschlaghülse 1 wird dann noch soweit über den Anschlagring 12 geschoben, bis er in der ersten umlaufenden Nut 7 federnd einschnappt. Der Anschlagring 12 hält dann die Anschlaghülse 1 in ihrer vorgesehenen Lage auf der Welle 6 und somit im eingebauten Zustand.

## Patentansprüche

1. Wellen-Anschlaghülse (1), deren erste Stirnfläche (2) als plane Anschlagfläche ausgebildet ist, und die eine Längsbohrung (4) hat mit einem von der ersten Stirnfläche (2) ausgehenden zylindrischen Abschnitt (5), an den sich eine erste umlaufende Nut (7) anschließt, die im Längsschnitt die Kontur eines Kreisausschnitts hat mit einem kegelförmig verengten offenen Abschnitt (8) zur zweiten Stirnfläche (3) der Wellen-Anschlaghülse (1) hin, in welche Nut (7) im eingebauten Zustand ein geschlitzter Anschlagring (12) greift, der in einer Ringnut (16) einer Welle (6) angeordnet ist, auf welcher die Wellen-Anschlaghülse (1) sitzt, dadurch gekennzeichnet, daß die Längsbohrung (4) mit einer zur zweiten Anschlagfläche (3) hin offenen zweiten umlaufenden Nut (11) größeren Durchmessers als die erste Nut (7) der Wellen-Anschlaghülse (I) versehen ist, in der der geschlitzte Anschlagring (12) im nicht eingebauten Zustand der Wellen-Anschlaghülse (1) sitzt und Anschlaghülse (1) und Anschlagring (12) eine vormontierte Baueinheit bilden.

2. Wellen-Anschlaghülse nach Anspruch 1, dadurch gekennzeichnet, daß die zweite umlaufende Nut (11) im Längsschnitt die Kontur der ersten umlaufenden Nut (7) hat mit einerseits einem kugelförmig verengten Abschnitt (13), welcher in einen im wesentlichen zylindrischen Endabschnitt (14) übergeht, der an die zweite Anschlagfläche (3) grenzt, und andererseits über einen sich zum kegelförmig verengten Abschnitt (9) der ersten umlaufenden Nut (7) hin erstreckenden trichterförmigen Abschnitt (10) mit der ersten umlaufenden Nut (7) verbunden ist.

## Claims

1. Shaft stop sleeve (1), the first end face (2) of which is designed as a planar stop face, and which has a longitudinal bore (4) with a cylindrical section (5) starting from the first end face (2), which section is adjoined by a first peripheral groove (7), which has in longitudinal section the contour of a sector of a circle, with a conically narrowed open section (8) towards the second end face (3) of the shaft stop sleeve (1), in which groove (7) there engages in the fitted state a split stop ring (12), which is arranged in an annular groove (16) of a shaft (6), on which the shaft stop sleeve (1) is seated, characterised in that the longitudinal bore (4) is provided with a second peripheral groove (11), open towards the second stop face (3) and of greater diameter than the first groove (7) of the shaft stop sleeve (1), in which second groove the split stop ring (12) is seated in the non-fitted state of the shaft stop sleeve (1) and stop sleeve (1) and stop ring (12) form a preassembled constructional unit.

2. Shaft stop sleeve according to Claim 1, characterised in that the second peripheral groove (11) has in longitudinal section the contour of the first peripheral groove ( 7 ), with on one side a spherically narrowed section ( 13 ), which merges with an essentially cylindrical end section (14), which is adjacent to the second stop face (3), and on the other side is connected to the first peripheral groove (7) via a funnel-shaped section (10) extending to the conically narrowed section (9) of the first peripheral groove (7).

3

EP 0 377 620 B1

## Revendications

1. Manchon d'arrêt (1) pour arbres, dont la première face frontale (2) revêt la forme d'une surface de butée plane, tandis que le manchon comporte un alésage longitudinal (4) avec une partie cylindrique (5) partant de la première phase frontale (2) et à laquelle se raccorde une première gorge périphérique (7) qui a en couple longitudinal le contour d'un secteur de cercle, avec une partie ouverte (8) allant en se rétrécissant en forme de cône vers la seconde face frontale (3) du manchon d'arrêt (1), gorge (7) dans laquelle vient en prise, lorsque le montage est terminé, un anneau d'arrêt fendu (12) qui est disposé dans une gorge annulaire (16) d'un arbre (6) sur lequel est placé le manchon d'arrêt (1), manchon d'arrêt caractérisé en ce que l'alésage longitudinal (4) est muni d'une seconde gorge périphérique (11) ouverte vers la seconde face frontale (3) et d'un diamètre plus grand que celui de la première gorge (7) du manchon d'arrêt (1), gorge (11) dans laquelle est placé l'anneau d'arrêt fendu (12) quand le manchon d'arrêt (11) n'est pas monté, et ce manchon d'arrêt (1) et l'anneau d'arrêt (12) constituent alors une unité préalablement montée.

2. Manchon d'arrêt pour arbres selon la revendication 1, caractérisé en ce que la seconde gorge périphérique (11) a en couple longitudinal le contour de la première gorge périphérique (7), avec d'un côté, une partie (13) allant en se rétrécissant en forme de sphère, et qui se transforme en une partie terminale (14) essentiellement cylindrique qui est contiguë à la seconde face frontale (3), tandis que de l'autre côté la seconde gorge périphérique (11) est reliée à la première gorge périphérique (7) par l'intermédiaire d'une partie (10) en forme d'entonnoir s'étendant vers la partie (9) se rétrécissant en forme de cône de cette première gorge périphérique (7).

4

Fig. 1

Fig. 2